# EUROPEAN PATENT APPLICATION

(11) **EP 4 567 641 A1**
(43) Date of publication of application: **11.06.2025**
(21) Application number: 23213871.9
(22) Date of filing: 04.12.2023
(51) Int. Cl.: G06F 21/10, G06F 21/31, G06F 21/62, G06N 3/02

(54) **NEURAL NETWORK SECURITY**

(71) Applicant: Koninklijke Philips N.V., 5656 AG Eindhoven (NL)
(72) Inventor: COKKARCHEDU KANTHARAO, Praveen, Eindhoven (NL); SRIPAD, Pradyumna, Eindhoven (NL); CHEGU RAMESH, Jeevan, Eindhoven (NL); SUBRAMANIAN, Balakrishnan Vinchu, Eindhoven (NL); KAKATHKAR, Varsha, Eindhoven (NL); SISODIA, Rajendra Singh, Eindhoven (NL)
(74) Representative: Philips Intellectual Property & Standards

(57) **Abstract**

Disclosed concepts provide improved security of a deployed neural network (i.e. improved security during inferencing of a neural network), in particular against membership inference attacks. Specifically, a data scrambler and a descrambling layer are provided. The data scrambler receives an input from an entity (e.g., a user) and only scrambles the input if the entity is authenticated and authorized. The descrambling layer is attached to the deployed neural network, and descrambles the input so that the neural network may provide a correct output corresponding to the initial (unscrambled) input from the entity. Of course, if the entity is not authenticated and/or authorized, then the input will not be scrambled and so the descrambling layer will provide an incorrect input to the neural network. Accordingly, unauthenticated, or unauthorized entities will not receive the correct output corresponding to the input from the entity from the deployed neural network (as the input provided by such entities will not be scrambled by the data scrambler).

## Description

### FIELD OF THE INVENTION

The present invention relates to a means for improving security of a deployed neural network, and more specifically to protecting deployed neural networks from membership inference attacks.

### BACKGROUND OF THE INVENTION

Neural network-based (i.e. machine learning) models have been applied to, and have become successful in solving, complex problems in a vast array of real-world contexts. Such models are often used in healthcare, finance, and ecommerce applications. To train such models, vast volumes of data are required. Often, the data used for training needs to be handled carefully. Indeed, training data often comprises sensitive and protected information such as medical records, location information, and other personally identifiable information (PII). Furthermore, training data is a source of competitive advantage for an organisation. It therefore follows that preventing unauthorised access to this protected information is an area of great concern.

To this aim, many best practices are implemented during data acquisition, data storage, and model training stages. Furthermore, attackers cannot directly access the data used for training once the model is trained and productionized (i.e., deployed). It is therefore often the case that fewer precautions are taken to protect the models once deployed.

Nevertheless, models are designed to capture the various relationships and patterns across the features present in training data. As the model increases in accuracy, all the information described by the training data is compressed/converted into the form of the model. This can lead to the model leaking information about training data. Thus, models may be manipulated to reveal information about the data used for training. Specifically, in adversarial situations, attackers who only have black box access to the model can pass an input and infer, based on the model output, if the data was part of training data. This is called a membership inference attack.

Accordingly, there exists a need for a means to protect deployed neural networks, in particular against membership inference attacks.

### SUMMARY OF THE INVENTION

According to examples in accordance with an aspect of the invention, there is provided a system for improving security of a deployed neural network. The deployed neural is configured to output a model prediction responsive to receiving a model input. The system comprises:
a data scrambler configured to:
   receive an entity input for the deployed neural network from an entity; and
   generate, responsive to successfully authenticating and authorizing the entity, a scrambled input by processing the entity input with a scrambling algorithm; and
a descrambling layer attached to the deployed neural network, the descrambling layer configured to:
   receive the scrambled input from the data scrambler; and
   generate an input for the deployed neural network by processing the scrambled input with a descrambling algorithm.

Embodiments thus provide improved security of a deployed neural network (i.e. improved security during inferencing of a neural network), in particular against membership inference attacks. Specifically, this is achieved by the provision of a data scrambler and a descrambling layer. The data scrambler receives an input from an entity (e.g., a user) and only scrambles the input if the entity is authenticated and authorized. The descrambling layer is attached to the deployed neural network, and descrambles the input so that the neural network may provide a correct output corresponding to the initial (unscrambled) input from the entity. Of course, if the entity is not authenticated and/or authorized, then the input will not be scrambled and so the descrambling layer will provide an incorrect input to the neural network. Accordingly, unauthenticated, or unauthorized entities will not receive the correct output corresponding to the input from the entity from the deployed neural network (as the input provided by such entities will not be scrambled by the data scrambler).

A deployed neural network is a neural network that has been trained and so is ready to generate model predictions based on model inputs. Values of weights of the deployed neural network may not be apparent to an entity using the neural network, and the training data used to train the deployed neural network is not available or accessible to the entity. However, at this stage training data used to train the neural network may be deduced by providing (often many) inputs to the deployed neural network, and assessing the corresponding output from the deployed neural network. That is, the output from the deployed neural network may be provided with a high degree of accuracy and/or confidence if the corresponding input is similar to data used to train the neural network. Accordingly, by providing large amounts of input to the deployed neural network and assessing the corresponding outputs, much of the training data may be deduced. This is a membership inference attack, which poses a threat to confidentiality and security of the training data.

In order to protect the deployed neural network against such an attack, a descrambling layer is attached to the deployed neural network. The descrambling layer is provided such that all inputs to the deployed neural network are descrambled according to a descrambling algorithm. Accordingly, the descrambling layer alters a data distribution of the input to the neural network. As a result, unless the input is scrambled according to a scrambling algorithm before being input to the deployed neural network, the output from the deployed neural network will be incorrect. In some cases, it may not be known to the entity, or apparent to the entity, that a descrambling layer is attached to the deployed neural network.

A data scrambler is provided that processes the (intended) input to the neural network from the entity with a scrambling algorithm. However, the data scrambler only generates a scrambled input if the entity is authenticated and authorized. As a result, only authenticated and authorized entities may receive a correct output from the deployed neural network, as the scrambling algorithm may essentially negate the effect (i.e., the data redistribution of the input) of the descrambling algorithm applied by the descrambling layer.

The data scrambler may be further configured to provide, responsive to unsuccessfully authenticating and/or authorizing the entity, the entity input as a non-scrambled input to the descrambling layer without processing the entity input with the scrambling algorithm. In this case, the descrambling layer may be further configured to receive the scrambled input or the non-scrambled input from the data scrambler; and generate an input for the deployed neural network by processing the non-scrambled input with the descrambling algorithm.

In other words, if the entity is not authenticated or is not authorized (or both) then the entity input is simply passed to the descrambling layer attached to the deployed neural network. The descrambling layer thus processes the non-scrambled entity input to generate the input for the deployed neural network. This will alter the input to the deployed neural network in a way that the output from the neural network will be incorrect.

In some embodiments, the system may further comprise an identity and access management (IAM) system configured to: receive access credentials from the entity indicating a right to use the deployed neural network; determine an authenticity and validity of the access credentials; and provide an IAM access token to the entity responsive to successfully determining the authenticity and validity of the access credentials. In this case, the data scrambler may be further configured to successfully authenticate and authorize the entity responsive to the entity being in possession of the IAM access token.

The authentication and authorization of the entity may be performed by an IAM system. Thus, for the entity to receive a valid/correct output from the deployed neural network, the entity will need to provide an IAM access token indicating that the entity has a right to use the deployed neural network. This may ensure that unauthorized or unauthenticated entities are not able to provide an appropriately scrambled input to the deployed neural network.

The data scrambler may be further configured to receive an unverified IAM access token from the entity; provide the unverified IAM access token to the IAM system; and receive a verification signal from the IAM system indicating whether the entity is successfully or unsuccessfully authenticated and authorized.

That is, the data scrambler itself may handle the IAM access token from the entity and consult the IAM system to verify the IAM access token. Accordingly, the data scrambler may selectively process the entity input with the scrambling algorithm based on the results from the IAM system.

In particular, the IAM system may be configured to generate the verification signal based on processing the unverified IAM token with an introspection algorithm. Thus, an introspection algorithm may be used to accurately and robustly determine whether the entity should be successfully authenticated and authorised.

In other embodiments, the system may further comprise a license file system configured to receive a license file from the entity indicating a right to use the deployed neural network; determine an authenticity and validity of the license file; and provide access for the entity to the data scrambler responsive to determining that the license file is authentic and valid.

In contrast to the IAM system, the license file system may be used offline to authenticate and authorize the user. That is, if the entity has a license file with a valid license key, then this may indicate they are authentic, and are authorized to use the deployed neural network. In this case, the license file system (either a separate component, or part of the data scrambler) will read the license file to perform scrambling. In addition, the descrambling layer may also read the license file to perform descrambling. Conversely, if the license file is not valid, then the entity is not an authentic and authorised entity, and the input from the entity will not be scrambled according to the scrambling algorithm.

In specific embodiments, the descrambling algorithm may perform a reverse function of a function of the scrambling algorithm.

Put another way, the descrambling algorithm may directly execute the opposite processes of the scrambling algorithm on the input to the deployed neural network in order to undo the scrambling of data by the scrambling algorithm. For example, if a function of the scrambling algorithm is to rotate the input (being an image) 90 degrees clockwise, then a function of the descrambling algorithm may be to rotate the input to the deployed neural network 90 degrees anti-clockwise.

The scrambling algorithm may comprise one or more randomized data transformations.

By ensuring that the scrambling algorithm executes a randomized process on the input, the security of the deployed neural network may be improved. Indeed, as the data transform is randomized, it may be more difficult to deduce the process performed by the scrambling algorithm, and therefore more difficult circumvent the protection afforded by the system.

When the entity input comprises image data, the one or more randomized data transformations may include channel-wise image rotation, a scalar multiplication, an element-wise matrix subtraction, a data encryption using a secret key, a noise addition, and/or a data shuffling.

When the entity input comprises text data, the one or more randomized data transformations may include a scalar multiplication, an element-wise matrix subtraction, a data encryption using a secret key, a noise addition, and/or a data shuffling.

When the entity input comprises audio data, the one or more randomized data transformations may include a scalar multiplication, an element-wise matrix subtraction, a data encryption using a secret key, a noise addition, and/or a data shuffling.

Each of the above example data transformations may successfully change the data distribution of the input such that the deployed neural network will provide an incorrect output if the input is not scrambled before a descrambling is applied.

In some embodiments, the data scrambler may be deployed in machine code. Specifically, the data scrambler may be used as a shared library or dynamic linked library file.

As a result, it may be more complex to deduce the operation of the data scrambler and therefore the security of the system is improved.

In some embodiments, the system may further comprise a training module configured to train the descrambling layer using a training algorithm configured to receive an array of training inputs and respective known outputs. A training input may comprise a scrambled input obtained by processing a model input with the scrambling algorithm, and a respective known output may comprise the model input.

In other words, the descrambling layer may be trained to process scrambled inputs into an original, unscrambled form by means of a training algorithm.

According to another aspect in accordance with the invention, there is provided a method for improving security of a deployed neural network. The deployed neural network comprises one or more layers, and is configured to output a model prediction responsive to receiving a model input. The method comprises:
receiving, by a data scrambler, an entity input for the deployed neural network from an entity;
generating, by the data scrambler, responsive to successfully authenticating and authorizing the entity, a scrambled input by processing the entity input with a scrambling algorithm;
receiving, by a descrambling layer attached to the deployed neural network, the scrambled input from the data scrambler; and
generating, by the descrambling layer, an input for the deployed neural network by processing the scrambled input with a descrambling algorithm.

According to a further aspect in accordance with the invention, there is provided a computer program comprising computer program code means adapted, when said computer program is run on a computer, to implement a method for improving security of a deployed neural network.

These and other aspects of the invention will be apparent from and elucidated with reference to the embodiments described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 presents two scenarios of a use of an embodiment of the disclosed invention;
Fig. 2 presents a block diagram of a system for improving security of a deployed neural network according to an embodiment of the invention; and
Fig. 3 presents a block diagram of a system for improving security of a deployed neural network according to another embodiment of the invention;
Fig. 4 presents a block diagram of a system for improving security of a deployed neural network according to a further embodiment of the invention;
Fig. 5 presents a block diagram of data scrambler according to an aspect of an embodiment of the invention;
Fig. 6 presents a flow diagram of a method for improving security of a deployed neural network according to a further embodiment of the invention; and
Fig. 7 is a simplified block diagram of a computer within which one or more parts of an embodiment may be employed.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. The mere fact that certain measures are recited in mutually different dependent claims does not indicate that a combination of these measures cannot be used to advantage.

It should be understood that the Figures are merely schematic and are not drawn to scale. It should also be understood that the same reference numerals are used throughout the Figures to indicate the same or similar parts.

Disclosed concepts provide improved security of a deployed neural network (i.e. improved security during inferencing of a neural network), in particular against membership inference attacks. Specifically, a data scrambler and a descrambling layer are provided. The data scrambler receives an input from an entity (e.g., a user) and only scrambles the input if the entity is authenticated and authorized. The descrambling layer is attached to the deployed neural network, and descrambles the input so that the neural network may provide a correct output corresponding to the initial (unscrambled) input from the entity. Of course, if the entity is not authenticated and/or authorized, then the input will not be scrambled and so the descrambling layer will provide an incorrect input to the neural network. Accordingly, unauthenticated, or unauthorized entities will not receive the correct output corresponding to the input from the entity from the deployed neural network (as the input provided by such entities will not be scrambled by the data scrambler).

By way of brief explanation, the structure of an artificial neural network (or, simply, neural network (NN)) is inspired by the human brain. Neural networks are comprised of layers, each layer comprising a plurality of neurons. Each neuron comprises a mathematical operation. In particular, each neuron may comprise a different weighted combination of a single type of transformation (e.g. the same type of transformation, sigmoid etc. but with different weightings). In the process of processing input data, the mathematical operation of each neuron is performed on the input data to produce a numerical output, and the outputs of each layer in the neural network are fed into the next layer sequentially. The final layer provides the output.

There are several types of neural network, such as convolutional neural networks (CNNs), recurrent neural networks (RNNs), and graphical neural networks (GNNs), to name just a few.

Methods of training a machine-learning algorithm are well known. Typically, such methods comprise obtaining a training dataset, comprising training input data entries and corresponding training output data entries. An initialized machine-learning algorithm is applied to each input data entry to generate predicted output data entries. An error between the predicted output data entries and corresponding training output data entries is used to modify the machine-learning algorithm. This process can be repeated until the error converges, and the predicted output data entries are sufficiently similar (e.g. ±1%) to the training output data entries. This is commonly known as a supervised learning technique.

For example, weightings of the mathematical operation of each neuron may be modified until the error converges. Known methods of modifying a neural network include gradient descent, backpropagation algorithms and so on.

Said training dataset may contain confidential, sensitive, or valuable information. Accordingly, it is an object of the present invention to prevent such training data from being deduced from the operation of the deployed (e.g., trained and used for inferencing) neural network.

In other words, embodiments of the invention are based on a technique to protect training data used to train a neural network once the neural network has been deployed (i.e. once the neural network is trained, and used for generating predictions based on new inputs). Embodiments combine a data scrambler and a descrambling layer, with access to the data scrambler only for entities that are authenticated and authorized to use the deployed neural network. In some cases, the authentication and authorization of the entity is performed by an identity and access management (IAM) system. In other cases, the authentication and authorization of the entity is performed by a license file system.

With these approaches, data passed to the model (i.e., an input from an entity) for inferencing is scrambled by a data scrambler, and is subsequently descrambled by the descrambling layer to match the original distribution of data. As the data scrambler (and the scrambling algorithm performed by the data scrambler) is protected via an authentication and authorization system (e.g., an IAM system, or a license file system), only authorized entities can generate the scrambled input that is expected by the deployed neural network with descrambling layer attached.

This prevents attackers from accessing/deducing training data. In other words, a valid input to the deployed neural network comprises scrambled data by virtue of the descrambling layer data. If the input data is not scrambled (e.g., due to the entity not being authorized or authenticated) the descrambling layer changes the data distribution of the input causing the deployed neural network to behave in an untrained manner.

Generating training data (e.g., gathering data, converting data into a suitable format for training the neural network, etc.) for training a neural network is generally a cumbersome and time-consuming activity. Organizations spend significant resources to procure the training data and process it. If adversaries can extract the training data from trained models, there may be significant financial losses for the organization. Using the present invention, data leakage from deployed neural networks may be prevented.

Even with black box access, attackers will not be able to infer and receive predictions from a deployed neural network protected by embodiment of the invention. Accordingly, misuse of the deployed neural network is avoided.

Furthermore, if the deployed neural network is trained using medical health records or personally identifiable information, then membership inference attacks may lead to targeted discrimination of the subjects whose data is used for training. Through embodiments of the present invention, these kinds of targeted attacks may be prevented.

In essence, disclosed embodiments are based on the principle that once a neural network is trained on a certain distribution of data (i.e., training data having a certain distribution), then during inferencing the neural network requires the input data to be in same distribution. If the distribution of the input data is altered, then the neural network will not perform as expected.

Disclosed embodiments thus aim to control the distribution of data of the input provided to the deployed neural network. This is achieved by:
(i) A data scrambler. The data scrambler is a module which changes the data distribution that is expected by the trained neural network. Only entities that are authorized and authenticated may access the data scrambler (i.e. use the scrambling algorithm of the data scrambler to alter the data distribution of the entity input. In some embodiments, the data scrambler is protected by IAM. In other embodiments, the data scrambler is protected by a license file system.
(ii) A descrambling layer. The descrambling layer is attached to the deployed neural network. This means that the descrambling layer receives inputs provided to the deployed neural network. The descrambling layer changes the data distribution of the input (either the scrambled input if the data scrambler is used, or the entity input if the entity is not authorized and authenticated). In some embodiments, the descrambling layer is implemented as an additional layer of the deployed neural network. The function of this the descrambling layer is to reverse data transforms applied by the data scrambler, and so bring data to original distribution and pass it to trained model. Of course, the descrambling layer is non-prejudicial, and so will apply data transforms in the aim of reversing assumed data transforms applied by the data scrambler, even when the input has not been scrambled.

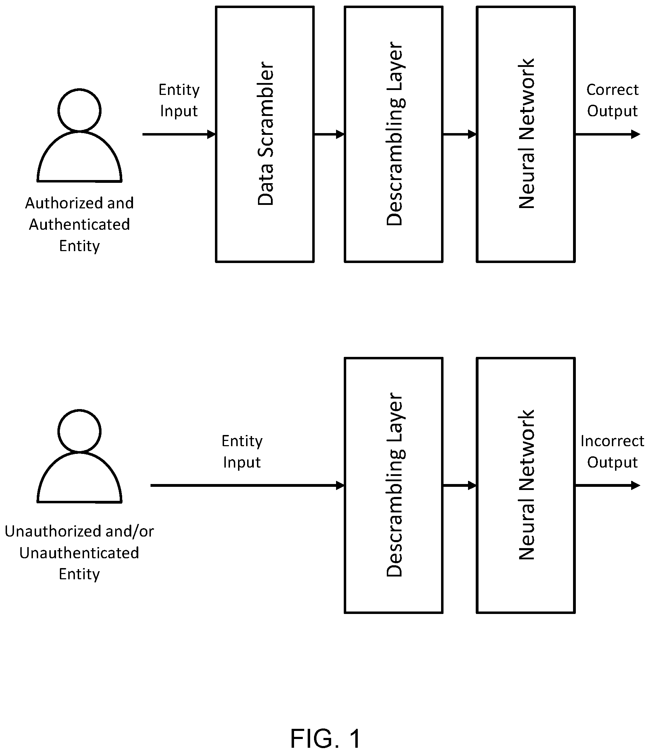

By using both the data scrambler and the descrambling layer in series, as depicted in Fig. 1, the original distribution of the entity input provided by an authorized and authenticated entity, and intended for processing by the deployed neural network is maintained (and passed to the deployed neural network for generation of an expected/target/'correct' prediction/output).

Conversely, in adversarial scenarios, attackers (i.e. an unauthorized and/or unauthenticated entity) with black-box access to the weights of the neural network cannot generate a scrambled input, since the data scrambler requires the entity to be authorized and authenticated (e.g., by an IAM system, or license file system). If the input is provided to the deployed neural network without scrambling, then the descrambling layer will alter the data distribution of the input, which will make neural network fail and return an unexpected/'incorrect' prediction/output. Thus, model inference attacks may be prevented.

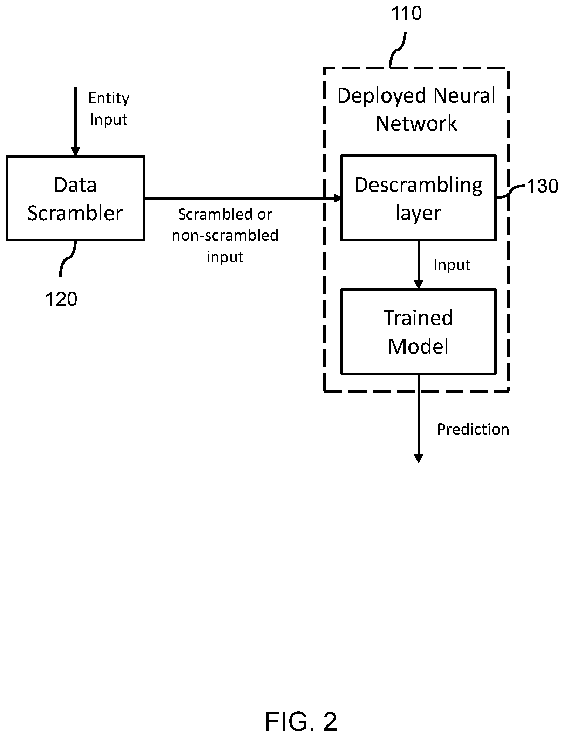

Turning to Fig. 2, there is presented a system for improving security of a deployed neural network 110 configured to output a model prediction responsive to receiving a model input.

The system comprises a data scrambler 120 and a descrambling layer 130. The data scrambler 120 and the descrambling layer 130 are provided in series. That is, an input intended for the model is first provided to the data scrambler 120, and then to the descrambling layer 130, before being provided to the deployed neural network 110. In essence, any input to the deployed neural network 110 is processed by the descrambling layer 130 before being provided to the deployed neural network 110.

As depicted, the descrambling layer 130 may be provided as part of the deployed neural network 110 (i.e., as an integrated layer of the deployed neural network 110). However, the descrambling layer 130 may alternatively be a separate entity attached to the deployed neural network 110. In any case, the descrambling layer 130 receives all (either scrambled or non-scrambled) inputs to the deployed neural network 110 as a result of being attached to the deployed neural network 110.

The data scrambler 120 is configured to receive an entity input for the deployed neural network 110 from an entity. That is, an intended input for the deployed neural network 110 is provided to the data scrambler 120 by an entity. The entity may be a user, or may be a device controlled by a user or controlled by other mean. The entity input may comprise any data appropriate for receiving a predicted output from the deployed neural network 110. For example, if the deployed neural network 110 is configured to output a predicted fitness score based on a heart rate signal, the entity input may be a heart rate signal.

Once the entity input is received, the data scrambler 120 is configured to generate a scrambled input by processing the entity input with a scrambling algorithm. The data scrambler 120 is only configured to process the entity input with the scrambling algorithm if the entity is successfully authenticated and authorized. In other words, the data scrambler 120 only generates the scrambled input if the entity is authorized to use the deployed neural network 110, and such an authorization and associated identity of the entity is authenticated.

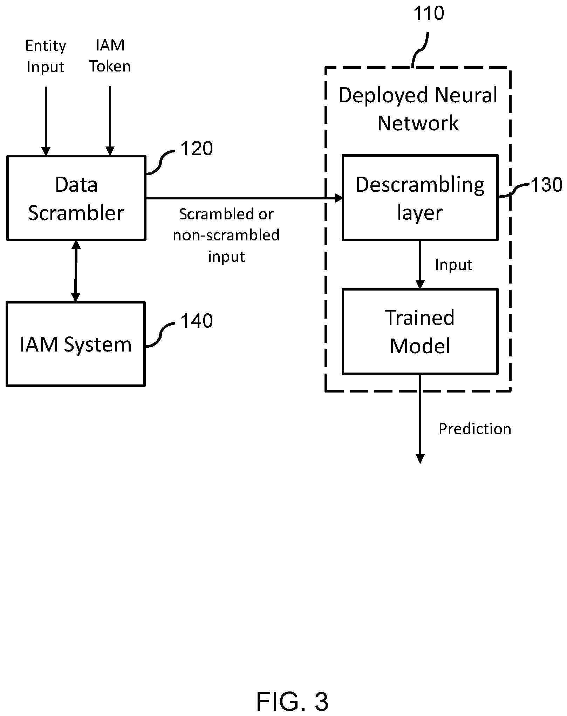

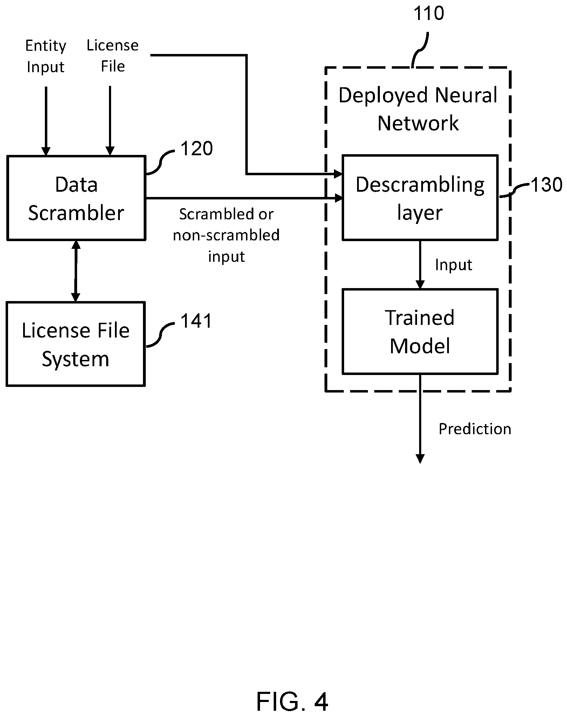

The checking of the authorization and authentication of the entity may be achieved by any means and methods known to the skilled person. This may be performed by the data scrambler 120 itself, or by an alternative/external means. One such option will be discussed in relation to Figs. 3 and 4 below. In any case, the data scrambler 120 is configured to generate the scrambled input with the scrambling algorithm only when the entity is successfully authenticated and authorized.

By successfully authorized, it is meant that the entity is allowed to use the deployed neural network 110. By successfully authenticated, it is meant that the entity is who they purport to be.

In other words, the data scrambler 120 is a protected component used to change the distribution of the data of the entity input using (one or more different) scrambling algorithms. This component is a critical part of the system, as it scrambles the input as expected by the deployed neural network 110.

So as to prevent attackers from deducing and tampering with the scrambling algorithm logic, the data scrambler 120 may be compiled to machine code and used as a shared library(.so) or a dynamic linked library(.dll) file. That is, the data scrambler 120 may be deployed in machine code, and optionally as a .so or .dll file.

In the alternative case (i.e., when the entity is unsuccessfully authenticated and/or authorized), the data scrambler 120 may be further configured to provide the entity input as a non-scrambled input to the descrambling layer 130 without processing the entity input with the scrambling algorithm. As a result, when the entity cannot be authenticated or authorized, or is not authorized or authenticated, the scrambling layer may pass the entity input in its raw (i.e., unchanged) form to the deployed neural network 110 (and hence, necessarily the descrambling layer 130).

Alternatively, the data scrambler 120 may not provide the entity input to the descrambling layer 130/deployed neural network 110. In this case, the deployed neural network 110 will not provide a prediction/output. This may be less desirable when it is advantageous to present a false illusion of the deployed neural network 110 being fully available to the entity. Indeed, it may be advantageous to not directly inform the (potentially malicious) entity that they are unable to use the deployed neural network 110.

The descrambling layer 130 is configured to receive the scrambled input (or non-scrambled/raw/unchanged input received from the entity) from the data scrambler 120. As stated above, the descrambling layer 130 receives all inputs to the deployed neural network 110. There may not be any way to provide an input to the deployed neural network 110 that does not first require input to the descrambling layer 130.

Further, the descrambling layer 130 is configured to generate an input for the deployed neural network 110 by processing the scrambled input (or non-scrambled/raw/unchanged input) with a descrambling algorithm.

In the case that the descrambling layer 130 processes the scrambled input (generated responsive to the entity being authorized and authenticated), the input for the deployed neural network 110 will be substantially similar to the initial entity input. Accordingly, the deployed neural network 110 will provide an output corresponding to the intended entity input (i.e. a correct output/prediction for the given input).

In the case that the descrambling layer 130 processes the non-scrambled input (when the entity hasn't been authorized and authenticated), the input for the deployed neural network 110 will be different to the initial entity input. Indeed, the descrambling algorithm will change the data distribution of the input. Accordingly, the deployed neural network 110 will provide an output that does not correspond the intended entity input (i.e. an incorrect output/prediction for the given input).

To reiterate, the descrambling layer 130 may be a custom neural network layer whose role is to reverse the data transformations applied by the data scrambler 120. This layer may be added on top of the trained neural network once its ready for inferencing. The descrambling layer 130 accepts scrambled data and an additional input from the data scrambler 120 to generate original dataset. The additional data that is obtained may be a sequence of rotations performed or a scalar used for multiplication or random matrix generated for subtraction, for example. Using this additional input, the descrambling layer 130 reverses the operations performed by the scrambler. This additional input is only generated when the entity is authenticated and authorised for using the data scrambler 120. If additional input data is not provided along with the inference data, the descrambling layer 130 will perform random transformations so that data distribution is different from actual/intended input.

Thus, only an authorized and authenticated user will receive an output that is intended by the trained neural network for the given entity input. Therefore, entities that are not authenticated and authorized will not be able to perform membership inference attacks.

In some embodiments, the system 100 may further comprise a training module configured to train the descrambling layer 130 using a training algorithm configured to receive an array of training inputs and respective known outputs. A training input may comprise a scrambled input obtained by processing a model input with the scrambling algorithm, and a respective known output may comprise the model input.

It should be noted that the descrambling layer may also adopt a rule-based approach for applying the descrambling algorithm. Therefore, a training module as above may not be required, with the descrambling algorithm applying a rule-based methodology to descramble the scrambled (or non-scrambled) input.

In specific embodiments, the descrambling algorithm may perform a reverse function of a function of the scrambling algorithm. Thus, any function performed by the scrambling algorithm on the input (e.g., a rotation, amplitude manipulation, convolution) may be reversed by the descrambling algorithm (e.g., an opposite rotation, reverse amplitude modulation, deconvolution, etc.). As a result, an input processed by the scrambling algorithm, and subsequently the descrambling algorithm, may not be changed in a substantial manner.

The scrambling algorithm may perform a randomized function, increasing a complexity of deducing and overcoming the system for improving security. This randomization may be deduced and accounted for by the descrambling algorithm. By way of simplified example, the scrambling algorithm may rotate an image by a randomized degree. The descrambling algorithm may thus deduce the degree of rotation and undo the rotation. Alternatively, the scrambling algorithm may either rotate the image, or alter a magnitude of the values of the pixels of the image. The descrambling algorithm may thus deduce the mode of function of the scrambling algorithm, and undo the function.

In other words, the scrambling algorithm may comprise one or more randomized data transformations. The scrambling algorithm may consist of one or more mathematical operations to change the distribution of data of the input. The scrambling algorithm thus generates scrambled data, providing the scrambled data to the descrambling layer 130 that reverses the scrambling operations.

Potential scrambling algorithms/techniques may include:
(i) Channel-wise rotation of images. This scrambling technique may be applied to an input comprising an RGB image. Each channel of the image is independently rotated to different degrees. For example, the red, green and blue channels of the images are rotated independently such that, when combined, the resultant image is vastly different from the original image. Indeed, images are usually passed with RGB channels in same orientation during training, and so the deployed neural network 110 expects all channels to be in the same orientation during inference. However, when channel-wise rotation is applied, then the orientation of the image is changed resulting in a change in the data distribution.
(ii) Scalar multiplication. This scrambling technique can be used on inputs comprising most datatypes, such as text, image and audio datasets. The input data is multiplied by a scalar so that it changes the distribution of values compared the distribution of values of the input data used for training. According to best practices for training deep learning models, input data values should be in the range of 0-1 or -1 to 1. When the neural network is trained with scaled input values in the above mentioned range, then the network will expect values in same range while inferencing. If the range of values of the input data is changed drastically by multiplying with a scalar, then neural network does not behave as expected and outputs incorrect/randomized predictions.
(iii) Elementwise matrix subtraction. This scrambling technique can be used on inputs comprising most datatypes, such as text, image and audio datasets. Specifically, data is subtracted/added by random matrix of same shape as the input data. As a result, the data of the input may have a different distribution than that is expected by the trained model. This operates based on the same principle as the scalar multiplication.
(iv) Data encryption using a secret key. This scrambling technique can be used on inputs comprising most datatypes, such as text, image and audio datasets. Specifically, data is encrypted according to a secret key, using any known encryption techniques. As a result, the data of the input may have a different distribution than that is expected by the trained model, as it will be entirely converted using the secret key.
(v) Noise addition. This scrambling technique can be used on inputs comprising most datatypes, such as text, image and audio datasets. Specifically, noise may be added to the data (according to any known noise distribution), thus obscuring the original data. As a result, the data of the input may be very difficult for the trained model to interpret, as it may have been trained on noiseless data.
(vi) Data shuffling. This scrambling technique can be used on inputs comprising most datatypes, such as text, image and audio datasets. Essentially, the order in which the data is provided to the deployed model is altered. As the data of the input is shuffled compared to data used to train the model, the trained model may not provide a proper/correct output.

Fig. 3 presents the block diagram of the system of Fig. 2 with the addition of an identity and access management (IAM) system. The IAM system 140 is provided in order to authenticate and manage authorization of the entity using the deployed neural network 110. In other words, the IAM system 140 determines access to use of the scrambling algorithm of the data scrambler 120.

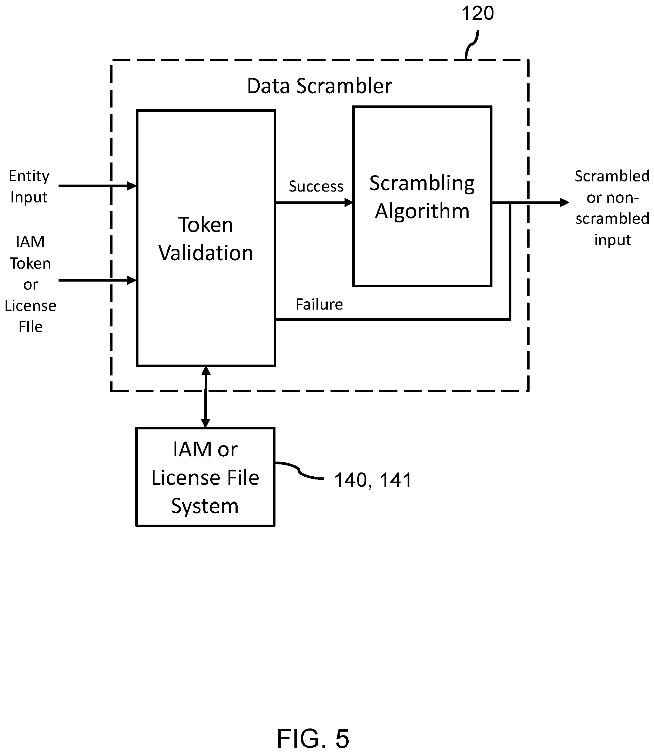

The IAM system 140 may be an external component to authenticate and authorize users, as depicted in Fig. 5, or may be integrated as part of the data scrambler 120. Overall, this component helps to restrict access to data scrambler 120 to right set of entity. Thus, to generate scrambled input, entities need to first authenticate themselves by providing valid credentials. Once authenticated, an IAM access token may be generated which can be used to authorize use of the scrambling algorithm. With an IAM system 140, organizations can grant or revoke access from user to scramble input data and thus perform inferencing even when the neural network is deployed on the edge devices.

Specifically, the IAM system 140 is configured to receive access credentials from the entity indicating a right to use the deployed neural network 110. The IAM system 140 then determines an authenticity and validity of the access credentials. If the access credentials are authentic and valid, an IAM access token is provided to the entity. Accordingly, the data scrambler 120 will successfully authenticate and authorize the entity responsive to the entity being in possession of the IAM access token (and therefore process the entity input with the scrambling algorithm.

In specific embodiments, the data scrambler 120 may receive an unverified IAM access token from the entity. The data scrambler 120 will then provide the unverified IAM access token to the IAM system 140. The IAM system 140 process the unverified IAM access token to determine whether the IAM access token is valid. That is, the IAM system 140 may generate a verification signal based on processing the unverified IAM token with an introspection algorithm. The data scrambler 120 then obtains the verification signal from the IAM system 140 indicating whether the entity is successfully or unsuccessfully authenticated and authorized. Appropriate processing of the entity input is then affected.

Fig. 4 presents the block diagram of the system of Fig. 2 with the addition of a license file system. Similarly to the IAM system 140, the license file system 141 is provided in order to authenticate and manage authorization of the entity using the deployed neural network 110. In other words, the license file system 141 determines access to use of the scrambling algorithm of the data scrambler 120.

In contrast to the IAM system, the license file system 141 enables authentication and verification of entities in offline scenarios, by using system licence keys for validating the authenticity of the user.

In this case, access to the scrambling layer will be dependent upon reading and contents the license file provided by the entity. In addition, the license file may be provided to the descrambling layer, which may attempt to read the license file to perform the descrambling. If the license file is not valid then the entity is not an authentic and authorised entity.

By way of explanation, a license file system 141 is a critical component of many software systems, used primarily in proprietary software applications. A license file includes information that helps to ensure that the software is being used in accordance with its licensing agreement.

License files typically comprise the following information:
(i) License Type. The license file contains information about the type of license the entity has purchased. This could be a single-user license, multi-user license, site-wide license, enterprise license, or any other type of license offered by the software vendor;
(ii) Validity. The license file also usually contains information about the license's validity period. Some licenses may be perpetual, while others might need to be renewed annually or after some other set period;
(iii) User Information. License files often contain user or company information. This could include the name of the person or organization to whom the license has been issued;
(iv) Feature. The license file may include information about what features of the software are accessible with the specific license. For instance, some licenses might allow full access to all features, while others may only provide access to a subset of features;
(v) Serial Number or Product Key. License files usually contain a unique serial number or product key which is used to activate the software. This key is often required during the software installation or activation process;
(vi) Encryption. To prevent tampering, license files are often encrypted or digitally signed. This ensures that the license file can only be read and interpreted by the software for which it was intended.

The license file is typically provided by the software vendor at the time of purchase or is embedded within the software and gets activated upon entering a valid license key.

Accordingly, the license file is checked by the license file system to authenticate the entity, check whether they are authorized to use the neural network, and authenticate the authorization. This may be performed by the data scrambler itself as a license file system, or by an external component configured to check the license file.

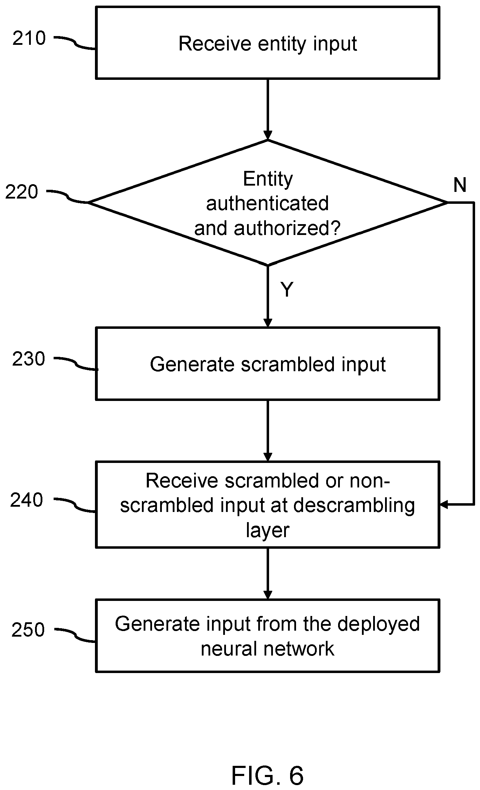

Fig. 6 depicts a flow diagram of a method for improving security of a deployed neural network according to an embodiment of the invention.

In step 210, an entity input for the deployed neural network from an entity is received by a data scrambler. The data scrambler may any of the disclosed data scramblers described above.

In step 220, an authorization and authenticity of the entity is analysed. If the entity is successfully authenticated, and is authorized to use the deployed neural network, then the method proceeds to step 230. If the entity is either not authorized to use the deployed neural network, or the identify and/or authorization is not able to be authenticated, then step 230 is skipped, and the method proceeds to step 240.

In step 230, a scrambled input is generated by the data scrambler. This is achieved by processing the entity input with a scrambling algorithm, as described above. In other words, the entity input is only processed with the scrambling algorithm if the entity is authenticated, and it is determined that the entity is authorized, and the authenticity of the authorization is successful.

In step 240, a descrambling layer attached to the deployed neural network receives the scrambled input from the data scrambler. Alternatively (if step 230 is skipped), the descrambling layer may receive a non-scrambled input (i.e., the raw entity input).

Then, in step 250, an input for the deployed neural network is generated by processing the scrambled input (or non-scrambled input if step 230 is skipped) with a descrambling algorithm. This input may then be provided to the deployed neural network for processing, such that the neural network provides an output (i.e., a prediction).

If step 230 was performed, the output from the deployed neural network may correspond to the output that is intended for the entity input by the trained neural network. If step 230 was not performed (as the entity was not authorized to scramble the input), the output from the deployed neural network may be essentially random. Accordingly, a threat of membership inference attacks by an entity may be reduced.

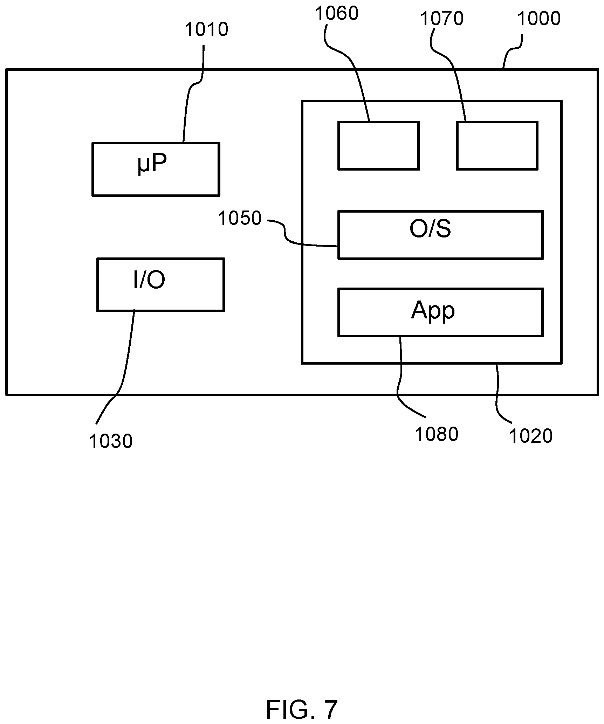

Fig. 7 illustrates an example of a computer 1000 within which one or more parts of an embodiment may be employed. Various operations discussed above may utilize the capabilities of the computer 1000. For example, one or more parts of a system for identifying a log file for resolution of a fault of a medical imaging device may be incorporated in any element, module, application, and/or component discussed herein. In this regard, it is to be understood that system functional blocks can run on a single computer or may be distributed over several computers and locations (e.g. connected via internet).

The computer 1000 includes, but is not limited to, PCs, workstations, laptops, PDAs, palm devices, servers, storages, and the like. Generally, in terms of hardware architecture, the computer 1000 may include one or more processors 1010, memory 1020 and one or more I/O devices 1030 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 1010 is a hardware device for executing software that can be stored in the memory 1020. The processor 1010 can be virtually any custom made or commercially available processor, a central processing unit (CPU), a digital signal processor (DSP), or an auxiliary processor among several processors associated with the computer 1000, and the processor 1010 may be a semiconductor based microprocessor (in the form of a microchip) or a microprocessor.

The memory 1020 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 1020 may incorporate electronic, magnetic, optical, and/or other types of storage media. Note that the memory 1020 can have a distributed architecture, where various components are situated remote from one another, but can be accessed by the processor 1010.

The software in the memory 1020 may include one or more separate programs, each of which comprises an ordered listing of executable instructions for implementing logical functions. The software in the memory 1020 includes a suitable operating system (O/S) 1050, compiler 1060, source code 1070, and one or more applications 1080 in accordance with exemplary embodiments. As illustrated, the application 1080 comprises numerous functional components for implementing the features and operations of the exemplary embodiments. The application 1080 of the computer 1000 may represent various applications, computational units, logic, functional units, processes, operations, virtual entities, and/or modules in accordance with exemplary embodiments, but the application 1080 is not meant to be a limitation.

The operating system 1050 controls the execution of other computer programs, and provides scheduling, input-output control, file and data management, memory management, and communication control and related services. It is contemplated by the inventors that the application 1080 for implementing exemplary embodiments may be applicable on all commercially available operating systems.

Application 1080 may be a source program, executable program (object code), script, or any other entity comprising a set of instructions to be performed. When a source program, then the program is usually translated via a compiler (such as the compiler 1060), assembler, interpreter, or the like, which may or may not be included within the memory 1020, so as to operate properly in connection with the O/S 1050. Furthermore, the application 1080 can be written as an object oriented programming language, which has classes of data and methods, or a procedure programming language, which has routines, subroutines, and/or functions, for example but not limited to, C, C++, C#, Pascal, BASIC, API calls, HTML, XHTML, XML, ASP scripts, JavaScript, FORTRAN, COBOL, Perl, Java, ADA, .NET, and the like.

The I/O devices 1030 may include input devices such as, for example but not limited to, a mouse, keyboard, scanner, microphone, camera, etc. Furthermore, the I/O devices 1030 may also include output devices, for example but not limited to a printer, display, etc. Finally, the I/O devices 1030 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 1030 also include components for communicating over various networks, such as the Internet or intranet.

If the computer 1000 is a PC, workstation, intelligent device or the like, the software in the memory 1020 may further include a basic input output system (BIOS) (omitted for simplicity). The BIOS is a set of essential software routines that initialize and test hardware at start-up, start the O/S 1050, and support the transfer of data among the hardware devices. The BIOS is stored in some type of read-only-memory, such as ROM, PROM, EPROM, EEPROM or the like, so that the BIOS can be executed when the computer 800 is activated.

When the computer 1000 is in operation, the processor 1010 is configured to execute software stored within the memory 1020, to communicate data to and from the memory 1020, and to generally control operations of the computer 1000 pursuant to the software. The application 1080 and the O/S 1050 are read, in whole or in part, by the processor 1010, perhaps buffered within the processor 1010, and then executed.

When the application 1080 is implemented in software it should be noted that the application 1080 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 1080 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The method of Fig. 6 and the systems of Figs. 2-5 may be implemented in hardware or software, or a mixture of both (for example, as firmware running on a hardware device). To the extent that an embodiment is implemented partly or wholly in software, the functional steps illustrated in the process flowcharts may be performed by suitably programmed physical computing devices, such as one or more central processing units (CPUs) or graphics processing units (GPUs). Each process - and its individual component steps as illustrated in the flowcharts - may be performed by the same or different computing devices. According to embodiments, a computer-readable storage medium stores a computer program comprising computer program code configured to cause one or more physical computing devices to carry out an encoding or decoding method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, the blocks shown in the block diagrams of Figs. 2-5 may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The block diagrams in the Figures illustrate the architecture, functionality, and operation of possible implementations of systems, methods, and computer program products according to various embodiments of the present invention. In this regard, each block in the block diagrams may represent a module, segment, or portion of instructions, which comprises one or more executable instructions for implementing the specified logical function(s). It will also be noted that each block of the block diagrams, and combinations of blocks in the block diagrams, can be implemented by special purpose hardware-based systems that perform the specified functions or acts or carry out combinations of special purpose hardware and computer instructions.

## Claims

1. A system for improving security of a deployed neural network (110) configured to output a model prediction responsive to receiving a model input, the system comprising:
a data scrambler (120) configured to:
receive an entity input for the deployed neural network from an entity; and
generate, responsive to successfully authenticating and authorizing the entity, a scrambled input by processing the entity input with a scrambling algorithm; and
a descrambling layer (130) attached to the deployed neural network, the descrambling layer configured to:
receive the scrambled input from the data scrambler; and
generate an input for the deployed neural network by processing the scrambled input with a descrambling algorithm.

2. The system of claim 1, wherein the data scrambler (120) is further configured to provide, responsive to unsuccessfully authenticating and/or authorizing the entity, the entity input as a non-scrambled input to the descrambling layer without processing the entity input with the scrambling algorithm; and
wherein descrambling layer (130) is further configured to:
receive the scrambled input or the non-scrambled input from the data scrambler; and
generate an input for the deployed neural network (110) by processing the non-scrambled input with the descrambling algorithm.

3. The system of claims 1 or 2, further comprising an identity and access management, IAM, system (140) configured to:
receive access credentials from the entity indicating a right to use the deployed neural network (110);
determine an authenticity and validity of the access credentials; and
provide an IAM access token to the entity responsive to successfully determining the authenticity and validity of the access credentials, and
wherein the data scrambler (120) is further configured to successfully authenticate and authorize the entity responsive to the entity being in possession of the IAM access token.

4. The system of claim 3, wherein the data scrambler (120) is further configured to:
receive an unverified IAM access token from the entity;
provide the unverified IAM access token to the IAM system (140); and
receive a verification signal from the IAM system indicating whether the entity is successfully or unsuccessfully authenticated and authorized.

5. The system of claim 4, wherein the IAM system (140) is configured to generate the verification signal based on processing the unverified IAM token with an introspection algorithm.

6. The system of claim 1 or 2, further comprising a license file system (141) configured to:
receive a license file from the entity indicating a right to use the deployed neural network (110);
determine an authenticity and validity of the license file; and
provide access for the entity to the data scrambler responsive to determining that the license file is authentic and valid.

7. The system of any of claims 1-6, wherein the descrambling algorithm performs a reverse function of a function of the scrambling algorithm.

8. The system of any of claims 1-7, wherein the scrambling algorithm comprises one or more randomized data transformations.

9. The system of claim 8, wherein the entity input comprises image data, and wherein the one or more randomized data transformations include channel-wise image rotation, a scalar multiplication, an element-wise matrix subtraction, a data encryption using a secret key, a noise addition, and/or a data shuffling.

10. The system of claims 8 or 9, wherein the entity input comprises text data, and wherein the one or more randomized data transformations include a scalar multiplication, an element-wise matrix subtraction, a data encryption using a secret key, a noise addition, and/or a data shuffling.

11. The system of any of claims 8-10, wherein the entity input comprises audio data, and wherein the one or more randomized data transformations include a scalar multiplication, an element-wise matrix subtraction, a data encryption using a secret key, a noise addition, and/or a data shuffling.

12. The system of any of claims 1-11, wherein the data scrambler (120) is deployed in machine code, and optionally wherein the data scrambler is used as a shared library or dynamic linked library file.

13. The system of any of claims 1-12, further comprising a training module configured to: train the descrambling layer (130) using a training algorithm configured to receive an array of training inputs and respective known outputs, wherein a training input comprises a scrambled input obtained by processing a model input with the scrambling algorithm, and wherein a respective known output comprises the model input.

14. A method for improving security of a deployed neural network configured to output a model prediction responsive to receiving a model input, the method comprising:
receiving (210), by a data scrambler, an entity input for the deployed neural network from an entity;
generating (230), by the data scrambler, responsive to successfully authenticating and authorizing the entity, a scrambled input by processing the entity input with a scrambling algorithm;
receiving (240), by a descrambling layer attached to the deployed neural network, the scrambled input from the data scrambler; and
generating (250), by the descrambling layer, an input for the deployed neural network by processing the scrambled input with a descrambling algorithm.

15. A computer program comprising computer program code means adapted, when said computer program is run on a computer, to implement the method of claim 14.
